# EUROPÄISCHE PATENTSCHRIFT

(11) **EP 1 312 232 B1**
(45) Veröffentlichungstag und Bekanntmachung des Hinweises auf die Patenterteilung: **08.10.2008**
(21) Anmeldenummer: 01969246.6
(22) Anmeldetag: 21.08.2001
(51) Int. Cl.: H04Q 7/32

(54) **VERFAHREN ZUR ZUGRIFFSSTEUERUNG IN EINEM FUNK-KOMMUNIKATIONSSYSTEM**
METHOD FOR CONTROLLING ACCESS IN A RADIO COMMUNICATIONS SYSTEM
PROCEDE DE COMMANDE D'ACCES DANS UN SYSTEME DE RADIOCOMMUNICATION

(30) Priorität: 21.08.2000 DE 10040821
(43) Veröffentlichungstag der Anmeldung: 21.05.2003
(73) Patentinhaber: SIEMENS AKTIENGESELLSCHAFT, 80333 München (DE)
(72) Erfinder: HÖYNCK, Andreas, 16540 Hohen Neuendorf (DE); SCHNIEDENHARN, Jörg, 13587 Berlin (DE); GESSNER, Christina, 81373 München (DE); KÖHN, Reinhard, 14197 Berlin (DE)
(86) Internationale Anmeldenummer: PCT/DE2001/003184
(87) Internationale Veröffentlichungsnummer: WO 2002/017663

(56) Entgegenhaltungen:
- EP-A- 0 993 212
- EP-A- 0 993 215
- WO-A-00/21320

## Beschreibung

Die Erfindung betrifft ein Verfahren zur Zugriffssteuerung in einem Funk-Kommunikationssystem, insbesondere in einem Mobilfunksystem

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA-(FDD-Modus) oder TD/CDMA-Übertragungsverfahren (TDD-Modus) über die Funkschnittstelle, beispielsweise das UMTS (Universal Mobile Telecommunication System) oder andere Systeme der 3. Generation sind Frequenzen im Frequenzband von ca. 2000 MHz vorgesehen.

Zur Teilnehmerseparierung wird z.B. beim GSM-Mobilfunksystem ein Zeitlagenmultiplex-Verfahren (TDMA) zur Unterscheidung der Signalquellen verwendet. In einem Zeitschlitz wird ein Funkblock übertragen, der empfangsseitig getrennt von anderen Funkblöcken auswertbar ist. Aus dem GSM-Mobilfunksystem ist es ferner bekannt, zur Ressourcenzuteilung einen Zugriffsblock in Aufwärtsrichtung zu senden. Damit signalisiert eine Teilnehmerstation dem Netz, daß es einen Verbindungsaufbau wünscht. Der Zugriff auf den Zeitschlitz, der für die Zugriffsblöcke reserviert ist, erfolgt jedoch willkürlich.

Falls mehrere Mobilstationen gleichzeitig in diesem Zeitschlitz senden, überlagern sich die Zugriffsblöcke und sind gegebenenfalls von der empfangenden Basisstation nicht detektierbar.

Für die Realisierung eines Random Access Verfahrens (Erstzugriff) in einem Mobilfunksystem sind verschiedene Ansätze bekannt. Sowohl für UTRA FDD als auch für TDSCDMA (bzw. UTRA TDD Low Chip Rate Option) werden zweistufige Random Access Prozeduren angewandt. Das heißt, daß die Teilnehmerstation, die eine Verbindung zum Netzwerk aufbauen möchte, zunächst eine Sequenz sendet (z.B. Preamble in FDD, SYNC1 code in TDSCDMA). Erst, wenn diese Sequenz vom Netz positiv beantwortet wird (z.B. über die physikalischen Kanäle AICH (FDD) oder FPACH (TDSCDMA)), wird der Zugriff fortgesetzt und die eigentliche Random Access Nachricht mit einigen relevanten Informationen auf dem sogenannten Physical Random Access Channel (PRACH) abgesetzt.

Die Auswahl der ersten Sequenz durch die Teilnehmerstation erfolgt dabei zufällig. Anschließend muß die Teilnehmerstation abhängig von der gewählten ersten Sequenz wissen, in welchen physikalischen Ressourcen der Zugriff fortgesetzt wird, d.h. in welchen Downlink-Ressourcen (AICH, FPACH) eine Antwort erfolgt und in welchen Uplink Ressourcen die Teilnehmerstation weitere Zugriffsinformationen schicken kann. Dies ist wichtig, um einerseits den Zugriff effizient zu gestalten und andererseits Kollisionen zwischen gleichzeitig zugreifenden Mobilfunkgeräten auf dem PRACH zu vermeiden.

Ferner muß berücksichtigt werden, daß die Teilnehmerstation nicht zuviel Zeit für die gesamte Random Access-Prozedur benötigen sollte, d.h. sie sollte nicht zu lange auf Antwort vom Netz oder auf die Bestätigung, daß sie in dem PRACH senden darf, warten müssen.

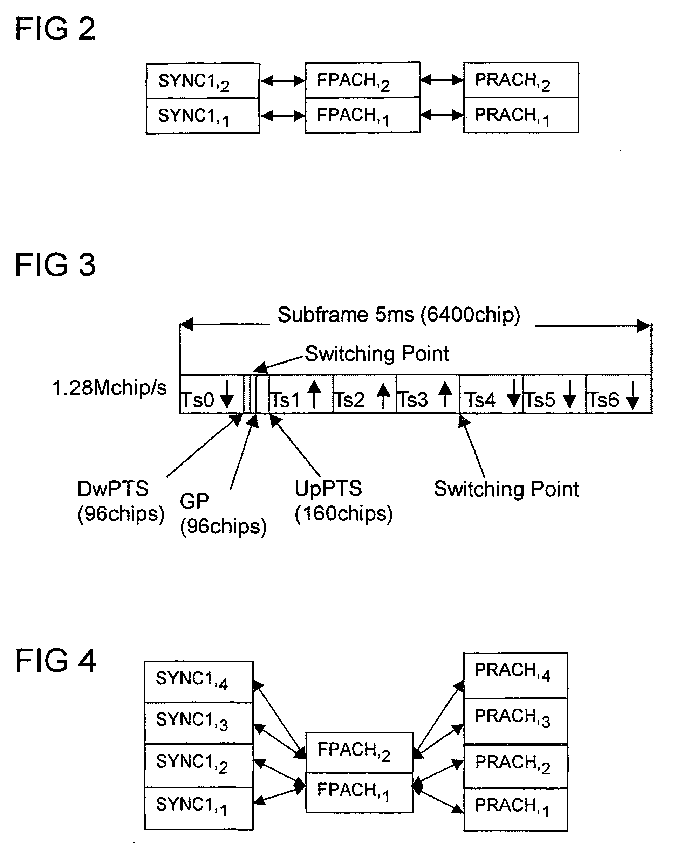

Für das TDSCDMA-System wird vorgeschlagen, eine eindeutige Zuordnung zwischen den benutzten FPACH und PRACH Ressourcen zu definieren. Ferner existiert eine Zuordnung dieser FPACH / PRACH Paare zu den benutzten SYNC1 Codes. Das bedeutet, daß in dem Moment, in dem eine Teilnehmerstation einen SYNC1 Code auswählt, bekannt ist, welches PRACH / FPACH Paar benutzt wird (Siehe hierzu Fig. 2).

In dem TDSCDMA-System wird eine spezielle sogenannte Subframe-Struktur verwendet, wobei ein Subframe 5 ms dauert. Zwei Subframes setzen sich zu einem Frame (Rahmen) von 10 ms zusammen (Siehe hierzu Fig. 3), wodurch eine Kompatibilität zu den weiteren Modi des UMTS-Standards gewährleistet ist. In jedem Subframe kann im sogenannten UpPTS (Uplink Pilot Timeslot) eine sogenannte SYNC1-Sequenz gesendet werden. Pro Funkzelle sind beispielsweise 8 SYNC1-Sequenzen zugelassen. Die Bestätigung durch das Netzwerk in Form eines sogenannten FPACH-Acknowledgement muß innerhalb von 4 Subframes erfolgen. Im FPACH wird die SYNC1 Sequenz noch einmal referenziert, auf die geantwortet wird, um die Teilnehmerstation eindeutig zu identifizieren.

Die für das TDSCDMA-System vorgeschlagene Lösung besitzt den Nachteil, daß eine Teilnehmerstation gegebenenfalls warten muß, bis sie ihren PRACH senden darf. Beispielhaft wird angenommen, drei Teilnehmerstationen senden eine jeweils unterschiedliche SYNC1-Sequenz in einem Subframe. Sind diese alle dem gleichen PRACH / FPACH Paar zugeordnet sind, so kann pro Subframe nur eine dieser Sequenzen im FPACH beantwortet werden. Dementsprechend verzögert sich die Antwort der Teilnehmerstationen auf dem PRACH. Auf die PRACH Ressourcen, die dem FPACH zugeordnet sind, kann zu einem Zeitpunkt immer nur eine Teilnehmerstation zugreifen. Insbesondere kann es sein, daß der RACH über mehrere Subframes verteilt gesendet wird, wenn beispielsweise über 2 oder 4 Subframes verschachtelt (interleaved) wird. In diesem Fall sind die Ressourcen für einen einzelnen Zugriff noch länger blockiert.

Aus der EP-A-0 993 212 ist ein Verfahren zur zufälligen Zugriffssteuerung für ein CDMA-System bekannt, bei dem ein Zeitfenster mit einer Anzahl von Zeitschlitzen für einen zufallsgesteuerten Zugriffskanal (Random Access Channel - RACH) in eine erste Anzahl Zeitschlitze, in denen ein konkurrierender Zugriff durch Kommunikationsendgeräte erfolgt, und in eine zweite Anzahl Zeitschlitze, in denen ein auf Reservierungen basierender Zugriff erfolgt, unterteilt ist, wobei die jeweilige Anzahl Zeitschlitze auf Basis von statistischen Informationen bestimmt wird.

Der Erfindung liegt die Aufgabe zugrunde, die Effizienz der Zugriffssteuerung zu erhöhen. Diese Aufgabe wird durch das Verfahren mit den Merkmalen des Patentanspruchs 1 gelöst. Vorteilhafte Weiterbildungen der Erfindung sind den abhängigen Patentansprüchen zu entnehmen.

Das erfindungsgemäße Verfahren schlägt daher vor, im Terminus der beschriebenen Systeme einem einzelnen FPACH mehrere PRACHs zuzuordnen, z.B. zwei PRACHs. Dieses Verfahren ist in gleicher Weise auch in anderen Funk-Kommunikationssystemen mit einer zweistufigen Zugriffsprozedur vorteilhaft einsetzbar.

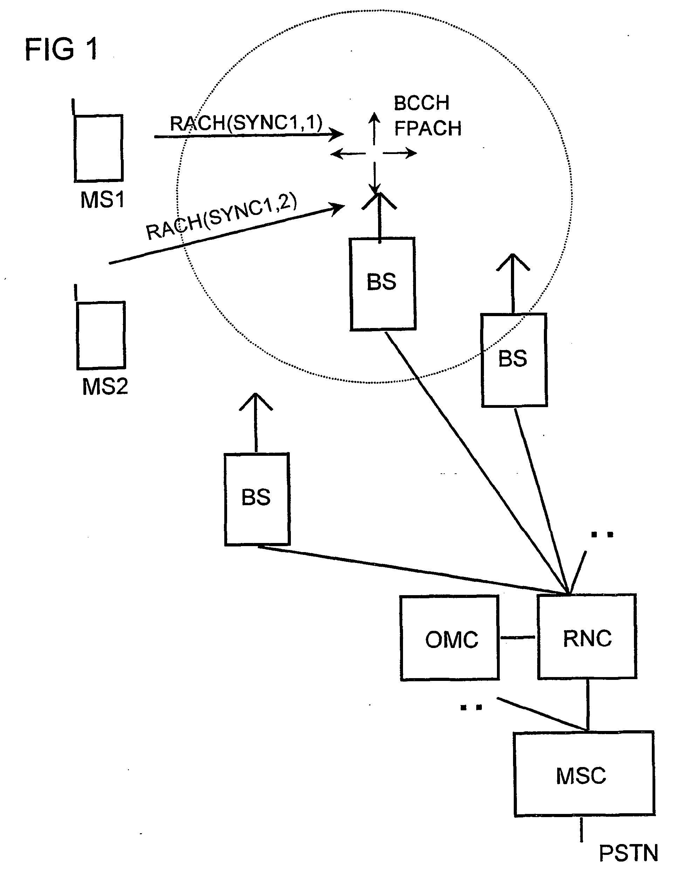

Ein Ausführungsbeispiel wird anhand der Figuren 1 und 4 näher erläutert.

Senden, wie beispielhaft in Fig. 1 dargestellt, zwei Teilnehmerstationen MS1, MS2 in einem Subframe zwei unterschiedliche SYNC1 Sequenzen SYNC1,₁ und SYNC1,₂, so wird der gleiche FPACH,₁, gegebenenfalls in verschiedenen Subframes, benutzt, um innerhalb von 4 Subframes auf beide SYNC1 Sequenzen zu antworten. In den darauffolgenden Subframes können dann beide Teilnehmerstationen MS1, MS2 gleichzeitig im PRACH antworten, jeweils unter Verwendung verschiedener Ressourcen PRACH,₁ und PRACH,₂.

Die Zuordnung von SYNC1 Sequenzen, PRACHs und FPACHs kann dadurch erfolgen, daß die Teilnehmerstationen in einer System-Information darüber informiert werden, welche SYNC1 Codes zu welchem PRACH / FPACH Paar gehören, wobei derselbe FPACH zu mehreren PRACH / FPACH Paaren gehören kann.

Alternativ kann eine eindeutige Regel spezifiziert werden, die die Zuordnung von SYNC1 Sequenzen, PRACHs und FPACHs festlegt, und die netzseitig und/oder teilnehmerstationsseitig bekannt ist.

Zusammenfassend bietet das beschriebene Verfahren die Vorteile, daß die Ausnutzung der FPACH- und PRACH-Ressourcen optimiert wird, daß der Random Access-Vorgang beschleunigt wird, und daß die Prozedur abhängig von der Interleaving-Größe des RACHs angepaßt werden kann.

Das in Fig. 1 dargestellte Mobilfunksystem als Beispiel eines Funk-Kommunikationssystems besteht aus einer Vielzahl von Mobilvermittlungsstellen MSC (Mobile Switching Center), die untereinander vernetzt sind bzw. den Zugang zu einem Festnetz PSTN herstellen. Weiterhin sind diese Mobilvermittlungsstellen MSC mit jeweils zumindest einer Einrichtung RNC (Radio Network Controller) zur Steuerung der Basisstationen BS (Base Station) und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS (Mobile Station) oder anderweitigen mobilen und stationären Endgeräten, aufbauen.

Durch jede Basisstation BS wird zumindest eine Funkzelle gebildet.

Ein Operations- und Wartungszentrum OMC realisiert Kontroll- und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß und für im unlizensierten Frequenzbereich betriebene Basisstationen und Teilnehmerstationen.

In der Fig. 1 sind beispielhaft Verbindungen zur Übertragung von Signalisierungsinformationen als Punkt-zu-Punkt-Verbindungen zwischen Teilnehmerstationen MS1, MS2 und einer Basisstation BS und ein Organisationskanal BCCH (Broadcast Control Channel) als Punkt-zu-Multipunkt-Verbindung dargestellt. Der Organisationskanal BCCH wird mit einer bekannten konstanten Sendeleistung von der Basisstation BS ausgesendet, und enthält unter anderem Angaben über die in der Funkzelle angebotenen Dienste und über die Konfiguration der Kanäle der Funkschnittstelle. In Aufwärtsrichtung UL wird für die Teilnehmerstationen MS1,MS2 ein Kanal RACH (Random Access Channel) zum willkürlichen Zugriff angeboten.

## Patentansprüche

1. Verfahren zur Zugriffssteuerung in einem Funk-Kommunikationssystem, bei dem
mehrere Teilnehmerstationen (MS1,MS2) auf einem Kanal zum willkürlichen Zugriff (RACH) eine jeweilige Zugriffssequenz (SYNC1) zu einer Basisstation (BS) des Funk-Kommunikationssystems senden,
von dem Funk-Kommunikationssystem auf einem weiteren Kanal (FPACH) eine Auswahl einer Teilnehmerstation (MS1) signalisiert wird, und
die ausgewählte Teilnehmerstation (MS1) nachfolgend auf einem physikalischen Zugriffskanal (PRACH) weitere Sequenzen zu der Basisstation (BS) sendet, wobei dem weiteren Kanal (FPACH) zumindest zwei physikalische Zugriffskanäle (PRACH) zugeordnet sind.

2. Verfahren nach Anspruch 1, bei dem
eine bekannte Beziehung zwischen den Zugriffssequenzen (SYNC1) und den physikalischen Zugriffskanälen (PRACH) besteht.

3. Verfahren nach Anspruch 2, bei dem
die Beziehung zwischen einem weiteren Kanal (FPACH) und den physikalischen Zugriffskanälen (PRACH) der Teilnehmerstation mittels einer System-Information signalisiert wird.

4. Verfahren nach Anspruch 2, bei dem
die Beziehung zwischen einem weiteren Kanal (FPACH) und den physikalischen Zugriffskanälen (PRACH) netzseitig und/oder teilnehmerstationsseitig bekannt ist.

## Claims

1. Method for access control in a radio communication system, in which
a plurality of subscriber stations (MS1, MS2) send a respective access sequence (SYNC1) to a base station (BS) in the radio communication system on a random access channel (RACH),
the radio communication system signals a subscriber station selection (MS1) on a further channel (FPACH), and
the selected subscriber station (MS1) subsequently sends further sequences to the base station (BS) on a physical access channel (PRACH), the further channel (FPACH) having at least two associated physical access channels (PRACH).

2. Method according to Claim 1, in which
there is a known relationship between the access sequences (SYNC1) and the physical access channels (PRACH).

3. Method according to Claim 2, in which
the relationship between a further channel (FPACH) and the physical access channels (PRACH) is signaled to the subscriber station using an item of system information.

4. Method according to Claim 1, in which the relationship between a further channel (FPACH) and the physical access channels (PRACH) is known to the network and/or to the subscriber stations.

## Revendications

1. Procédé de commande d'accès dans un système de radiocommunication, dans lequel
plusieurs stations d'abonnés (MS1, MS2) émettent une séquence d'accès respective (SYNC1) vers une station de base (BS) du système de radiocommunication sur un canal destiné à l'accès aléatoire (RACH),
une sélection d'une station d'abonné (MS1) est signalée par le système de radiocommunication sur un canal supplémentaire (FPACH), et
la station d'abonné sélectionnée (MS1) émet ensuite d'autres séquences vers la station de base (BS) sur un canal d'accès physique (PRACH), au moins deux canaux d'accès physiques (PRACH) étant affectés au canal supplémentaire (FRACH).

2. Procédé selon la revendication 1, dans lequel
une relation connue existe entre les séquences d'accès (SYNC1) et les canaux d'accès physiques (PRACH).

3. Procédé selon la revendication 2, dans lequel
la relation entre un canal supplémentaire (FPACH) et les canaux d'accès physiques (PRACH) de la station d'abonné est signalée au moyen d'une information du système.

4. Procédé selon la revendication 2, dans lequel
la relation entre un canal supplémentaire (FPACH) et les canaux d'accès physiques (PRACH) est connue côté réseau et/ou côté station d'abonné.
